# EUROPÄISCHE PATENTSCHRIFT

(11) **EP 1 360 897 B1**
(45) Veröffentlichungstag und Bekanntmachung des Hinweises auf die Patenterteilung: **10.08.2005**
(21) Anmeldenummer: 03010220.6
(22) Anmeldetag: 07.05.2003
(51) Int. Cl.: A01K 31/06, A01K 63/00

(54) **Vogelkäfig**
Bird cage
Cage à oiseaux

(30) Priorität: 07.05.2002 US 140722
(43) Veröffentlichungstag der Anmeldung: 12.11.2003
(73) Patentinhaber: Rolf C. Hagen, Inc., Montreal, Quebec H4R 1E8 (CA)
(72) Erfinder: Plante, Robin, Sainte-Barbe, Quebec (CA); LaFond, Marc, Laval, Quebec (CA)
(74) Vertreter: Meyer, Ludgerus A.

(56) Entgegenhaltungen:
- US-A- 2 611 338
- US-A- 4 858 755
- US-A- 5 452 681

## Beschreibung

Die Erfindung bezieht sich auf einen Vogelkäfig gemäß dem Oberbegriff des Anspruchs 1.

Aus der US 5,452,681 ist ein auseinandernehmbarer Vogelkäfig bekannt, der eine mit Bodenschale und Bodengitter versehenden Grundplatte, voneinander beabstandete Ecktürme und eine obere geschlossene Abdeckung aufweist, bei der zwischen den Ecktürmen Gitter eingesetzt sind, um den Käfig zu schließen. Der Käfig kann auch mehrstöckig ausgebildet sein. Außerdem enthält der Käfig Gittertüren für den Zugang zum Innenraum des Käfigs.

Ausgehend von diesem Stand der Technik liegt der Erfindung die Aufgabe zugrunde, einen Vogelkäfig anzugeben, der verbesserte Beobachtungsmöglichkeiten auf im Käfig befindliche Vögel liefert und insbesondere die Möglichkeit liefert, die Vögel aus jedem Winkel sehen zu können.

Diese Aufgabe der Erfindung wird dadurch gelöst, dass die Türme aus lichtdurchlässigem, insbesondere transparenten Material gebildet sind, und dass die Abdeckung einen Kunststoffrahmen mit vorderen, rückwärtigen und Seitenteilen aufweist, die eine Öffnung mit dem Rahmen bilden, wobei ein Drahtgitter an dem Rahmen befestigt ist, das die Öffnung schließt.

Nachstehend werden einige Aspekte der vorliegenden Erfindung in Bezug auf den Stand der Technik näher erläutert.

Gemäß einem Aspekt der vorliegenden Erfindung erlaubt es der Vogelkäfig, einen hohen Prozentanteil des von einem Vogel oder Vögeln in dem Käfig verursachten Abfalls zurückzuhalten, anstatt den Abfall in die Umgebung herauswerfen zu lassen. Dies wird durch eine besondere Vogelkäfiggrundanordnung erreicht, die an ihrem Umfang eine Ablenkplattenanordnung aufweist, die verhindert, dass Abfall aus dem Vogelkäfig herausfällt, wenn ein Vogel mit seinen Flügeln im Käfig herumschlägt. Die Ecktürme des Käfigs können ebenfalls als Schutzschilde oder Ablenkplatten wirken, um zu verhindern, dass Körnerschalen aus dem Käfig herausgeworfen werden, wenn ein Vogel gefüttert wird.

Gemäß einem anderen Aspekt der vorliegenden Erfindung enthält die Grundanordnung ein einziges Schubfach, das so ausgebildet ist, dass der gesamte im Käfig erzeugte Abfall darin hineinfällt. Dies wird dadurch erreicht, dass das Schubfach eine größere Fläche als die Bodenfläche des Lebensraums innerhalb des Käfigs aufweist. Diese Anordnung verhindert nicht nur, dass der Abfall aus dem Käfig auf den Boden herausgeworfen wird, sondern verhindert auch, dass der Abfall in die Grundanordnung des Käfigs fällt. Daher braucht der Besitzer des Käfigs nur das Schubfach reinigen und den Käfig nicht auseinander nehmen, um sowohl die Grundanordnung als auch das Schubfach zu reinigen.

Der Käfig ist so ausgebildet, dass die darin befindlichen Vögel aus jedem Winkel deutlich zu sehen sind, entweder durch die Drahtgitter, die die Seiten des Käfigs bilden, oder durch die Türme, die einen Teil des Käfigrahmens bilden. Dies wird dadurch erreicht, dass die Türme aus lichtdurchlässigem Material, wie z. B. transparentem oder durchscheinendem Kunststoff bestehen, die einen Erkerfenstereffekt erzeugen, so dass die Vögel in dem Käfig deutlich durch die Türme in den Käfigecken gesehen werden können. Diese Konstruktion vermeidet das gefängnisartige Gefühl von bekannten Vogelkäfigen, obgleich die Drahtgitter für eine gute Ventilation verbleiben und der Käfig es einem Vogel erlaubt, überall im Käfig herumzuklettern.

Gemäß einem anderen Aspekt der vorliegenden Erfindung sind Fütterungsstellen für den Vogel vorgesehen, die von außerhalb des Käfigs zugänglich sind. Es ist ein Träger für einen Vogelfutterbehälter vorgesehen, der zwischen einer ersten Stellung, in der dieser als Sitzstange für einen Vogel dient, wenn der Futterbehälter sich innerhalb des Käfigs befindet und einer zweiten Position bewegbar ist, um die Öffnung im Käfig, in der die Futterstelle befestigt ist, zu schließen, wenn der Futterbehälter aus dem Käfiginneren herausgezogen ist. Gemäß einer bevorzugten Ausführungsform im Hinblick auf diesen Aspekt der Erfindung sind Futterstationen in den vier Türmen an den Käfigecken angeordnet.

Gemäß einem noch weiteren Aspekt der vorliegenden Erfindung ist bei einer Ausführungsform der Erfindung der Vogelkäfig mit Sitzstangen oder Ästen bestückt, die in alternativen Positionen an den Türmen ausgebildet sein können, so dass der Vogel entweder näher oder entfernter von den Turmwänden sitzen kann. Dies wird dadurch erreicht, dass die Stangen oder Äste mit gebogener Konfiguration und mit Befestigungseinrichtungen versehen sind, die in Befestigungseinrichtungen in den Türmen oder in den Futternäpfen eingreifen. In einer Stellung biegen sich die gebogenen Stangen von den Türmen weg, so dass ein auf der Stange sitzender Vogel von der Turmwand weiter weg ist und in einer alternativen Position, in der die Kurve sich näher an der Turmwand befindet, in der der Vogel näher an dem Turm sitzt. Der Turm dient als Fenster und erlaubt eine volle Sicht auf den Vogel.

Die Drahtgitter, die die Seiten, die Vorderseite und die Rückseite des Vogelkäfigs bilden, sind alle einzeln entfernbar. Zur leichteren Herstellung sind die Gitter alle im wesentlichen rechteckig ausgebildet und schnappen leicht in Verbinder in den Türmen. Es ist auch ein entfernbares oberes Gitter in der Abdeckanordnung des Käfigs ausgebildet. Nach ihrem Einsetzen bildet die Abdeckung einen großen Bogen in dem Gitter zur Erzeugung einer Spannung, so dass das obere Gitter ortsfest bleibt.

Die offene Konfiguration, die sich durch das obere Gitter ergibt, verbessert ferner die Sichtbarkeit des Käfiginneren, maximiert die Luftzirkulation, erhöht die Kletterfläche für die Vögel, vergrößert das Volumen des Käfigs und folgt dem normalen Flugweg eines Vogels innerhalb des Käfigs.

Ein noch anderer Aspekt der vorliegenden Erfindung besteht in der Ausbildung und in der Betätigung einer Drahtgittertür oder -türen in einer maximalen Größe, um einen leichten Eintritt und eine leichte Herausnahme des Vogels oder von Vögeln aus dem Vogelkäfig zu ermöglichen. Die Türen sind weiterhin so befestigt, dass sie in Bezug auf den Käfig nach außen oder innen drehbar ausgebildet sind. Wenn sie nach außen geöffnet werden, hängt das Drahtgitter nahe an der Seite des Käfigs und erstreckt sich nicht weit von dem Käfig nach außen. Dies vermeidet jede Wahrscheinlichkeit, dass jemand zufällig die Tür anstößt und sich entweder verletzt oder den Käfig beschädigt. Die Möglichkeit, das Drahtgitter nach innen zu klappen, ist besonders vorteilhaft, wenn der Vogelkäfig offen bleibt, um dem Vogel oder den Vögeln zu erlauben, frei in und aus dem Käfig hinein oder hinaus zu fliegen, da die Tür eine bequeme Landefläche innerhalb des Käfigs bildet, wenn der Vogel in den Käfig zurückkehrt. Wenn der Vogel auf der nach innen geklappten Tür Abfälle erzeugt, fallen diese in die Grundanordnung und landen in dem Schubfach anstelle, dass sie auf dem Fußboden geworfen werden. Wenn die Tür nach innen geklappt ist, ergibt dies außerdem ein Labyrinth für einen Vogel, wenn dieser klettert, da der Vogel sowohl auf der oberen als auch auf der unteren Fläche der horizontalen Tür klettern kann.

Gemäß einem weiteren Aspekt der vorliegenden Erfindung ist ein Bodengitter in dem Käfig vorhanden, das in einem entfernbaren Schubfach gehalten ist, das einen Teil der Grundanordnung bildet. Durch Öffnen des Schubfachs um weniger Zentimeter kann das Bodengitter zum Reinigen oder für andere Zwecke entnommen werden. Im Stand der Technik kann das Bodengitter nur entfernt werden, wenn die Abdeckung des Schubfachs entfernt wird, was heikel ist und die Entnahme der Vögel aus dem Käfig erfordert.

Ein noch anderer Aspekt der vorliegenden Erfindung besteht darin, dass eine einzigartige Käfigabdeckung verwendet wird, die einen Tragegriff enthält, mit dem der Käfig an der Decke aufgehängt werden kann. Die Abdeckung ist prinzipiell durch einen Umfangsrahmen und das Abdeckgitter gebildet. Das Gitter bildet einen Landebereich für den Vogel, wenn dieser in dem Raum herumfliegt, in dem der Käfig angeordnet ist. Die Konturen des Käfigabdeckgestells sind nicht dafür geeignet, das ein Vogel darauf steht, so dass der Vogel nur auf dem Drahtgitter steht, was bewirkt, dass Abfälle in den Käfig fallen und in dem Schubfach gesammelt werden.

Gemäß noch einem anderen Aspekt der vorliegenden Erfindung kann der Käfig erweitert werden, um seine Kapazität zu vergrößern. Dies wird gemäß einer Ausführungsform erreicht, indem einfach die Abdeckanordnung des Käfigs entfernt wird und ein zusätzlicher Satz von Türmen befestigt wird, die im wesentlichen identisch mit den Originaltürmen sind, die bereits für den Käfig verwendet werden, und die Abdeckung auf den Oberseiten der zusätzlichen Türmen erneut befestigt wird. Zusätzliche Gitter können an den neuen oberen Bereichen des Käfigs befestigt werden, um die Erweiterung zu vervollständigen. Die zusätzlichen Türme können zusätzliche Fütterungsstationen und Adapter enthalten, die verwendet werden, um die zusätzlichen Türme mit den Originaltürmen zu verbinden.

Ein anderer Aspekt der vorliegenden Erfindung ist der modulare Aufbau des Käfigs, der es ermöglicht, dass der Käfig in Teilen gelagert und versandt werden kann und leicht für den Benutzer zusammenbau- und auseinandernehmbar ist.

Ein anderer Aspekt der vorliegenden Erfindung besteht in der Fähigkeit, dass der Vogelkäfig allein auf einem Boden, auf einem Tisch oder auf einem passenden Ständer steht, der ebenfalls eine zerlegbare Konstruktion aufweisen kann. Der Stand gemäß einem Aspekt der vorliegenden Erfindung enthält vorzugsweise einen Speicherbereich für Futtersäcke oder anderes Material, das mit dem Vogelkäfig verwendet wird und der Ständer kann mit Sandsäcken oder Wasserbehältern gefüllt werden, um seine Stabilität zu erhöhen.

Die verschiedenen Aspekte der vorliegenden Erfindung lassen sich besser in Bezug auf die nachstehende Beschreibung in Verbindung mit den begleitenden Zeichnungen verstehen.

Es zeigen:
- Fig. 1: eine perspektivische Frontansicht einer Ausführungsform eines Vogelkäfigs und eines Ständers gemäß einer Ausführungsform der Erfindung,
- Fig. 2: eine Teilexplosionsansicht der Abdeckung, der Türme und der Grundanordnung eines Käfigs von Fig. 1,
- Fig. 3: eine explosionsperspektivische Ansicht eines Käfigs gemäß den Figuren 1 und 2,
- Fig. 3a: eine Explosionsansicht eines Teils einer anderen Ausführungsform eines Käfigs gemäß der Erfindung,
- Fig. 4-6: Teilquerschnittsansichten der Grundanordnung eines Käfigs, die die Ablageanordnung geöffnet, so dass das Bodengitter entfernt werden kann bzw. teilweise geschlossen oder voll geschlossen zeigen,
- Fig. 7, 8: Teilquerschnittsansichten durch eine Fütterungsstation, die einen Futterbehälter und Halter in ihrer geschlossenen und geöffneten Position zeigen,
- Fig. 9: eine teilperspektivische Ansicht eines Eckturms, die zeigt, wie eine Sitzstange an der Innenseite einer Ausführungsform der vorliegenden Erfindung angeordnet sein kann,
- Fig. 10: eine teilperspektivische Ansicht eines Vogelbades, das in d'em Käfig angeordnet ist,
- Fig. 11: eine teilperspektivische Ansicht eines Vogelkäfigs, die das in dem Käfig befestigte Vogelbad und ein oberhalb des Bades angebrachtes Badeschild zeigt,
- Fig. 12 - 14: Teilquerschnittsansichten des Vogelkäfigs, die das Türgitter in geschlossener, nach innen geöffneter oder nach außen geöffneten Positionen zeigen,
- Fig. 15 - 17: perspektivische Ansichten des Käfigs, die eine Art zeigen, durch die der Käfig erweitert oder mit vergrößerter Kapazität versehen werden kann,
- Fig. 18: eine perspektivische Ansicht einer voll aufgebauten erweiterten Konfiguration des Käfigs,
- Fig. 19: eine perspektivische Ansicht eines Ständers für einen Käfig gemäß einem anderen Aspekt der Erfindung,
- Fig. 20 - 22: perspektivische Ansichten eines Ständers von Fig. 19 ohne Türen, die die Art zeigen, in der der Ständer zusammengesetzt wird,
- Fig. 23, 24: teilperspektivische Ansichten eines Ständers, die die Art zeigen, wie die Türen auf dem Ständer zusammengesetzt werden, und
- Fig. 25: eine Teilquerschnittsansicht einer anderen Ausführungsform einer Grundanordnung eines Käfigs gemäß der Erfindung.

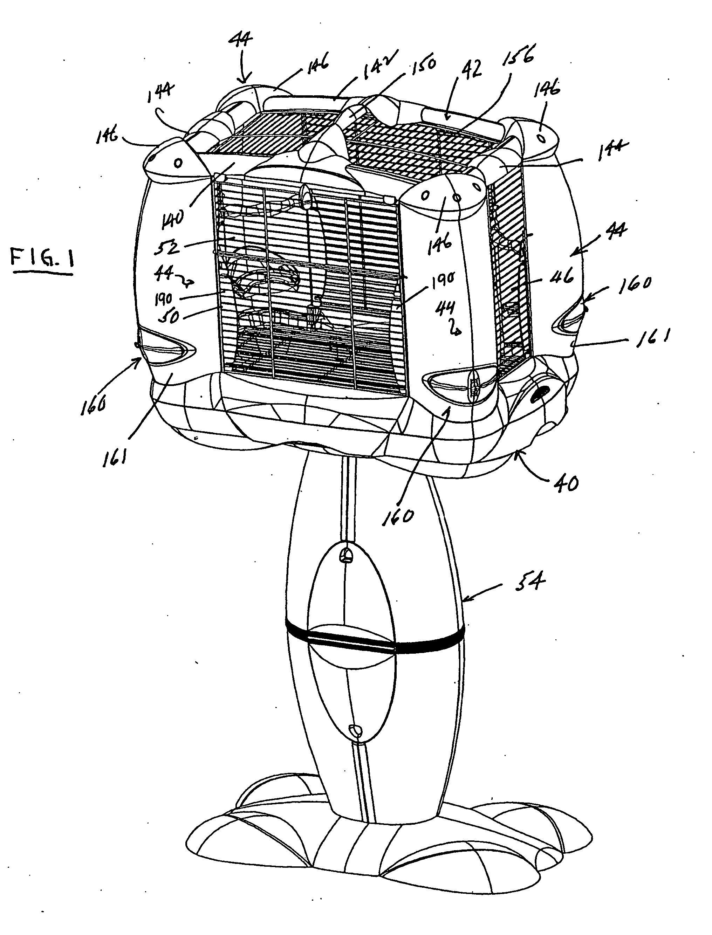

Der zerlegbare Vogelkäfig 30, der in den Zeichnungen gezeigt ist, enthält im wesentlichen eine Grundanordnung 40, eine Abdeckung 42, Ecktürme 44, Seitengitter 46, ein Rückwandgitter 48 und ein Frontgitter 50. Das Frontgitter 50 mit einem darüber angeordneten Türgitter 52 zusammen mit dem Rückwandgitter 48 und den Seitengittern 46 und 48 schließen die Front, die Rückwand und die Seiten des Käfigs ein. Die Grundanordnung 40 und die Abdeckung 42 bilden zusammen mit den Ecktürmen 44 den Rahmen des Käfigs. In vielen der Ansichten der Erfindung, die in den Zeichnungen gezeigt ist, sind ein oder mehrere Gitter entfernt, um die anderen Teile der Anordnung besser sehen zu können. In Fig. 1 ist der Käfig 30 auf einem Ständer 54 gezeigt, jedoch ist darauf hinzuweisen, dass der Käfig auch ohne einen Ständer verwendet werden kann und auf jeder Bodenfläche, wie z. B. einem Tisch oder einem Fußboden aufgestellt werden kann, oder er kann von oben getragen werden oder er kann mit Ständern alternativer Konfigurationen verwendet werden. Die verschiedenen oben genannten Teile werden nachstehend im Detail näher erläutert.

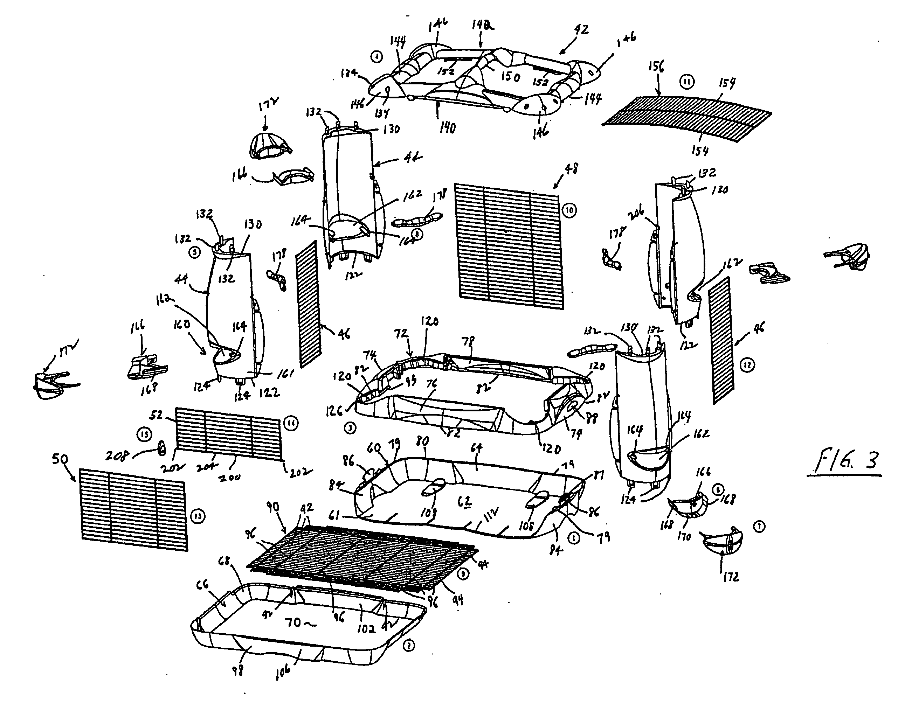

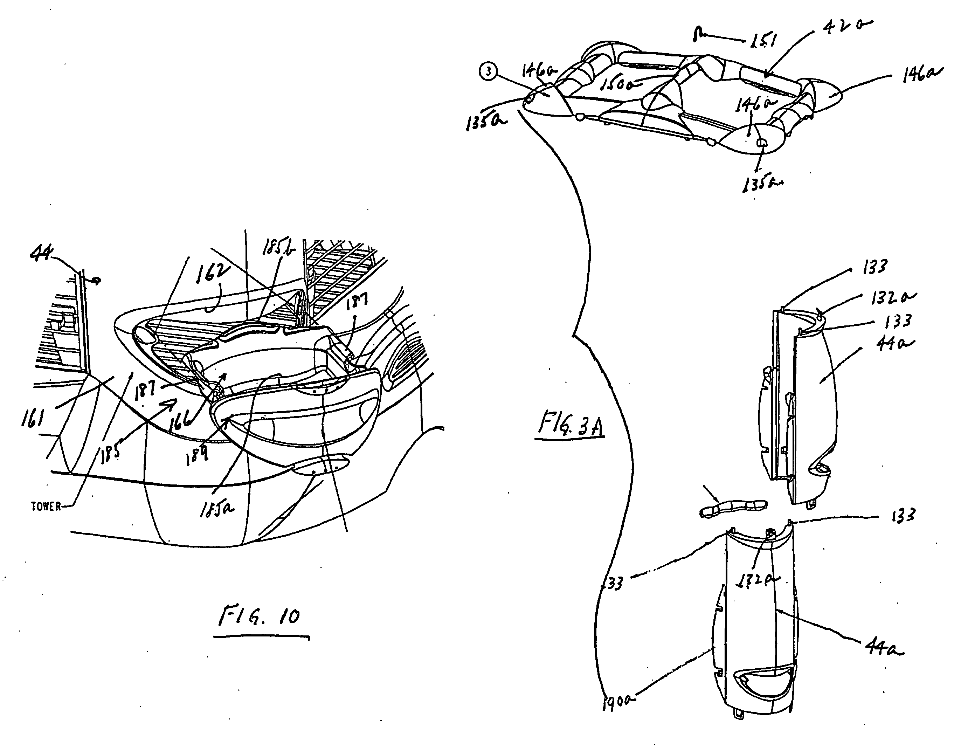

Die Grundanordnung 40 gemäß einer Ausführungsform der Erfindung ist im Detail in den Figuren 3 - 6 dargestellt und enthält eine Basis 60, eine Schale 66, eine Abdeckung 72 und ein Bodengitter 90. Die Basis 60 weist eine Bodenwand 62 und eine Seitenwand 64 auf, die sich um die Seiten und Rückseite der Bodenwand erstrecken. Die Vorderseite 61 der Basis 60 ist offen (nicht mit Seitenwänden 64 versehen), um es zu ermöglichen, dass die Schale 66 in die Basis und aus der Basis geschoben werden kann. Die Schale 66 enthält eine Umfangswand 68, die um vier Seiten des Schalenbodens 70 verläuft. Die Abdeckung 72 bildet in dieser Ausführungsform einen offenen Rahmen mit Seitenteilen 74 und Vorder- und Rückenteile 76 und 78. Die Abdeckung 72 ruht auf der Basis 60, wobei die oberen Kanten 79 der Seitenwand 64 der Basis und die unteren Kanten 82 der Seiten-, der Vorder- und Rückwandteile 74, 76 und 78 der Abdeckung ineinandergreifen. Wie Fig. 3 zeigt, tragen die Seitenteile 84 der Seitenwand 64 der Basis 60 sich nach oben erstreckende Verbindungsteile 86, die in Öffnungen 88 in den Seitenwandteilen 74 der Abdeckung eingreifen, um die Basis und die Abdeckung verbunden zu halten. Die dargestellten Verbindungsteile 86 weisen hakenartige Flansche 87 auf, die sich in die Öffnungen 88 erstrecken, jedoch ist darauf hinzuweisen, dass viele andere Arten von Verbindungen, die im Stand der Technik bekannt sind, verwendet werden können, wie z. B. Schrauben, Klammern, usw. und die Verbindungen können an anderen als oder zusätzlich an den Seiten der Basis 60 und Abdeckung 72 erstellt werden. Die Basis 60 und die Abdeckung 72 werden normalerweise nicht voneinander getrennt, wenn sie einmal zusammengesetzt sind.

Entsprechend einer Ausführungsform der Erfindung ruht das Bodengitter 90 auf den Flanschen 92 auf dem rückwärtigen Wandabschnitt 102 der Schale 66 und auf den Flanschen 93 auf den Seitenteilen 74 der Abdeckung 72. Das Gitter 90 wird aus einer Reihe von parallelen Drähten 94 gebildet, die von einer Seite zur anderen Seite in dem Käfig verlaufen und sind durch eine Reihe von kräftigeren Querdrähten 96 verbunden, die sich von vorne nach hinten erstrecken. Das Drahtgitter 90 wird in zusammengesetzter Stellung auf der Schale 66 und innerhalb der Basis 60 durch die Oberseiten der Front und Rückabschnitte 98 und 102 der Seitenwand 68 der Schale frei gehalten, die sich über die Höhe des Gitters 90 erstreckt, wenn die Schublade voll in die Basis eingeführt ist (siehe Fig. 6).

In den Figuren 4 - 6 ist im Detail dargestellt, wie die Schale 66 auf der Basis 60 getragen wird, wie die Schale öffnet und schließt und wie das Bodengitter 90 entfernt wird. Wie in diesen Figuren vorgeschlagen ist, lässt sich das Gitter 90 durch teilweises Herausziehen der Schale 66 aus der Basisanordnung 40 entfernen. Der Schalenboden 70 weist einen flachen größeren Bereich 100 auf, der sich von einem rückwärtigen Abschnitt 102 der Umfangswand 68 zum Frontabschnitt 98 erstreckt und glatt in eine nach unten sich erstreckende Rampe 104 bis zu einem Punkt hinter dem Fingergriff 106 im Frontabschnitt 98 verläuft. Die Bodenwand 62 der Basis 60 trägt Rampen 108 an der Oberseite 109 nahe der Rückwand 64 (siehe in der Explosionsansicht von Fig. 3), die mit dem Schalenboden 70 der Schale zusammenwirken, so dass die Schale angehoben wird, wenn sie voll in die Basis 60 eingeführt wird und etwas herunterfällt, wenn die Schublade wenige Inches aus der Basis 60 herausgezogen wird (vergleiche Figuren 4 und 5). Die Rampen 108 in der Basis 60 wirken auf den Schalenboden 70 der Schale und die Rampe 104 an der Vorderseite der Schale auf die Leiste 112 an der Vorderseite 110 der Bodenwand 62 der Basis derart, dass die Schale angehoben wird, wenn sie voll in die Basis gemäß Fig. 6 eingeführt wird. Wenn die Schale voll eingeführt ist, berührt sie das Bodengitter 90 unter der Oberkante des Vorderabschnitts 98 der Schale, so dass das Gitter nicht entfernt werden kann. Aus Fig. 4 ist erkennbar, dass, wenn die Schale wenige Inches geöffnet wird, so dass der Schalenboden von den Rampen 108 heruntergleitet und die Rampe 104 von der vorderen Leiste 112 der Basis abfällt, die Schale eine niedrigere Position einnimmt, die das Bodengitter 90 freigibt, so dass es unter der Kante 82 der Abdeckung 72 und über die Vorderwand der Schale herausgleiten kann. Wenn die Schale vollständig, wie in Fig. 6, eingeführt ist, bewegt sich die Vorderkante 95 der Schalenseitenwand in eine enge Nähe zur unteren Kante 82 der Abdeckung und das Bodengitter 90 wird in Position festgehalten.

Aus Fig. 6 ist entnehmbar, dass die Vorderkante 112 der Basisbodenwand 62 in eine Kerbe 116 am vorderen Ende der Rampe 104 eingreift, um die Schale in der inneren zurückgezogenen Position der Basis lösbar festzuhalten. Ein leichtes Ziehen des Handgriffes 106 überwindet jedoch der durch Eingriff der Kante 112 mit der Kerbe 116 erzeugten Widerstand, so dass die Schale und das Bodengitter 90 herausgezogen oder dass die Schale mit dem Gitter vollständig zur Reinigung usw. aus der Basis 60 entnommen werden kann. Das Gitter 90 bleibt auf den Führungsflanschen 93 gehalten, kann jedoch davon abgehoben werden, wenn die Schublade wenige Inches herausgezogen ist.

Die Konstruktion der Grundanordnung 40 soll verhindern, dass Vogelabfall aus dem Käfig herausfliegen kann, wenn ein Vogel oder Vögel sich in dem Käfig bewegen. Die Ausbildung der Seitenwände 74, 76 und 78 der Abdeckung 72 zusammen mit der Seitenwand 64 der Basis 60 und der Umfangswand 68 der Schale bilden eine C-förmige Ablenkung an den vier Seiten der Grundanordnung 40, um Vogelabfall im Käfig zu halten. Jeder Abfall, der im Käfig herumgewirbelt wird, der die Seitenwände der Grundanordnung trifft, bleibt in der Käfiggrundanordnung 40 zurück und wird nicht aus dem Käfig und auf den Fußboden oder andere umgebende Flächen herausgeschleudert. Dieses Merkmal ist in Fig. 1 deutlich dargestellt. Es ergibt sich auch aus Fig. 1, dass der Bereich der Bodenfläche des Käfigs, die etwa durch die Türme 44 und die Seiten-, Rückwand- und Frontgitter 46, 48 und 50 (mit der Tür 52) definiert ist, wesentlich kleiner als der Bereich der Grundanordnung ist und daher fallen Vogelabfälle innerhalb der Abdeckung 72 in die Basis 60.

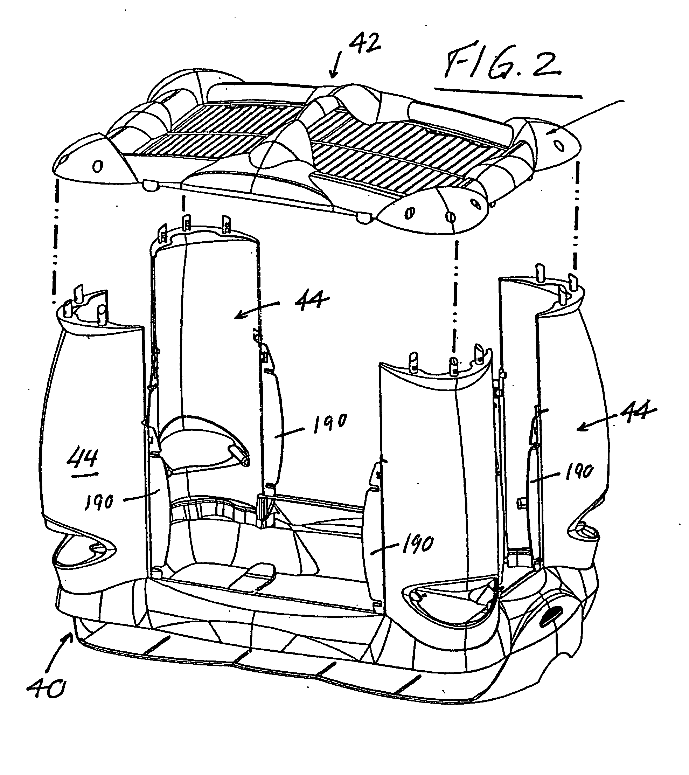

Jeder der Türme 44 an den Ecken des Käfigs ist vorzugsweise aus transparentem Kunststoffmaterial, wie z. B. Polystyrol oder andere lichtdurchlässige geeignete Materialien, die entweder transparent oder durchscheinend sind, hergestellt, so dass ein Erkerfenstereffekt erreicht wird, der es ermöglicht, Vögel im Käfig in ihrer gesamten Umgebung zu sehen, wobei gleichzeitig ein Beobachter die Vögel sehen kann, ohne dass die Sicht durch Drahtgitter beeinträchtigt wird. Das Kunststoffmaterial kann auch gefärbt sein. Wie in den Figuren 2 und 3 gezeigt, weist jeder Turm 44 eine gebogene Form auf, die den gebogenen Ausnehmungen 120 an jeder der Ecken der Grundabdeckung 72 entspricht. In dieser Ausführungsform trägt die untere Kante 122 jedes Turms eine Reihe von Verbindern 124, die mit Aufnahmen 126 an den Rändern der gekrümmten Ecken 120 der Abdeckung zusammenpassen, um die Türme lösbar festzuhalten. Die obere Kante 130 jedes Turms trägt außerdem einen oder mehrere Verbinder 132, die mit Öffnungen 134 an den Ecken der Abdeckung 42, wie nachstehend genauer beschrieben wird, zusammenwirken.

Die Abdeckung 42 ist im wesentlichen rechteckig in der Aufsicht und weist vordere und rückwärtige Teile 140 und 142 sowie Seitenteile 144 auf, die zusammen den Abdeckrahmen bilden. Die vorderen, hinteren und Seitenteile 140, 142 und 144 sind an den gerundeten Eckstücken 146 verbunden, die die Öffnungen 134 enthalten, die die Verbinder 132 an den Oberseiten der Türmen aufnehmen.

Eine andere Ausführungsform, die in Fig. 3a dargestellt ist, enthält einen einzigen Verbinder 132a in der Mitte der Oberseite des Turms 44a und Ausrichtstifte 133 an jedem Ende der Turmoberseite. In den Eckstücken 146a der Abdeckung 42a sind komplementäre Ausnehmungen 135a gezeigt, um die Verbinder 132a aufzunehmen sowie nicht dargestellte Öffnungen zur Aufnahme der Ausrichtstifte.

Zwischen den mittleren Bereichen der vorderen und rückwärtigen Teile 140 und 142 der Abdeckung 42 erstreckt sich ein Tragegriff 150. In Fig. 3a ist auch ein Aufhänger 151 dargestellt, der mit dem Handgriff verbunden werden kann, damit der Käfig von oben aufgehängt werden kann. Die vorderen und rückwärtigen Teile 140 und 142 tragen auch Schienen 152 (siehe Fig. 3), die die vorderen und hinteren Kanten 154 der Oberseite der Drahtgitter 156 aufnehmen. Das Gitter 156 ist vorzugsweise rechteckig und flach geformt, so dass es leicht herzustellen ist. Wenn das obere Gitter 156 in die Schienen 152 eingleitet, biegt sich das Gitter leicht von Seite zu Seite, um eine Spannung zwischen dem Drahtgitter und den Schienen der Abdeckung zu erzeugen, so dass das Gitter festgehalten wird. Das obere Gitter 156 erhöht die Ventilation in dem Käfig, bietet eine Landefläche für Vögel, wenn sie aus dem Käfig herausgelassen wurden, um im Raum herumzufliegen, und bietet eine Kletterfläche für Vögel in dem Käfig. Die gerundete Kontur der Abdeckung, die aus dem vorderen und rückwärtigen Teil 140 und 142 gebildet ist, die Seitenteile 144, die Eckteile 146 und der Handgriff 150 bieten sich nicht als Plattformen für Vögel außerhalb des Käfigs an und sie bevorzugen, auf dem Gitter 156 zu bleiben. Da die Vögel auf dem Gitter anstelle auf der Abdeckung stehen, fällt ihr Abfall durch das Gitter in den Käfig und in die Schale 66 der Grundanordnung und verschmutzt nicht die umgebende Fläche. Die Abdeckanordnung ist vorzugsweise aus geformten Kunststoff wie Polystyrol oder anderem geeignetem Material entsprechend dem der Türme 44, der Basis 60, der Schale 66 und der Abdeckung 72 geformt. Die vorderen, hinteren und Seitenteile 140, 142 und 144 zusammen mit den Eckstücken 146 und dem Handgriff 150 können als einheitliche Struktur ausgebildet sein oder alternativ können verschiedene Teile getrennt hergestellt und zusammengefügt sein.

Jeder der Türme 44 weist eine Futterstation 160 auf, die in der dargestellten Ausführungsform der Fig. 1 nahe dem unteren Ende 161 angeordnet sind. Die Türme tragen die Stationen in Öffnungen 162 (siehe Figuren 3 und 7 - 9). Jede Öffnung 162 weist Schienen 164 entlang ihrer Seiten auf, die eine Körnerschublade 166 durch nach außen gerichtete Flansche 168 an jeder Seite tragen, die in den Schienen verschiebbar aufgenommen sind. Eine Schublade 166 weist eine im wesentlichen U-förmige Plattform 170 auf, die einen Körnerbecher 172 trägt. Die Becher 172, die die Körner aufnehmen, können zum Reinigen und zum Füllen aus den Schubladen herausgenommen und darin eingesetzt werden. Gemäß einer Ausführungsform der Erfindung kann die Schublade durch eine Federklinke 169 an der Plattform 170 gehalten werden, die in die Bodenkante 162a der Öffnung 162 eingreift, wenn die Schublade sich in der äußeren Position gemäß Fig. 8 befindet. Die Schublade weist eine gebogene Wand 171 auf, die sich nach oben von der Plattform erstreckt und etwa mit der Öffnung ausgerichtet ist, wenn die Schublade sich in äußerer Position der Fig. 8 befindet. Die Wand 171 dient als Tor in der Öffnung, um zu verhindern, dass Vögel den Käfig verlassen können, wenn die Futterschale 172 aus der Schublade entfernt ist. Die Futterschale weist seinerseits eine nach außen gebogene Wand 173 auf, die in Form und Größe der Öffnung 162 entspricht, so dass dann, wenn die Schale voll in den Käfig eingeführt ist, die Schublade bei jeder Bewegung auf den Schienen 168 die Öffnung 162 gemäß Fig. 7 beschließt. Die Körnerschale 172 enthält einen Körnerbehälter 175, der teilweise durch die vordere gekrümmte Wand 173 und eine kürzere Innenwand 177 entlang den Seitenwänden 179 gebildet ist. Gemäß in den Figuren 7 und 8 dargestellter Ausführungsformen der Erfindung befindet sich ein Federhaken 183 unter der Containerbodenwand 181 und greift in die untere Kante der Öffnung ein, wenn die Schublade und die Körnerschale voll in die Öffnung 162 in dem Turm 44 eingeführt sind, und hält die Schublade 166 und die Körnerschale 172 lösbar in Position. Die Stellungen der Schublade und der Schale sind in der geschlossenen und geöffneten Position in den Figuren 7 und 8 dargestellt. In Fig. 8 ist die Schale 172 aus der Turmöffnung 162 herausgezogen dargestellt, so dass sie mit Futter gefüllt werden kann. Die Schublade 166 bewegt sich mit der Schale auf den Schienen 164. Die Schale 172 kann aus der Schublade heraus bewegt werden, indem die Kupplung, die die Teile zusammenhält, gelöst wird. In der dargestellten Ausführungsform überlappt die Vorderkante 177a der Schale 172 auf einen Teil der Länge die Oberkante 171a der Wand 171 der Schublade 166. Um die beiden Teile zu trennen, braucht die Schale nur an der Rückseite angehoben werden, so dass die überlappende Kante über die Oberseite 171a der Wand 171 gelangt. Es können auch andere Mittel verwendet werden, wie z. B. Schnappverbindungen, Haken, Clips, usw., um eine lösbare Ausbildung von Schublade und Schale zu erreichen.

Um die Körnerschale 172 und die Schublade 166 in die äußere Position der Fig. 8 herauszuziehen, werden die Griffe 173a und 183a, die jeweils an der Oberseite der Vorderwand 173 der Körnerschale und das Ende der Feder 183 zusammengedrückt, um den Flansch 183b auf dem Federboden über die Bodenkante 162a der Öffnung 162 anzuheben. Während sich die beiden in die äußere Position bewegen, dient die Klinke 169 als Anschlag, um die Schublade und die Körnerschale in Position zu halten. Um die Schublade 166 und die Schale 172 in die Position von Fig. 7 zurückzubewegen, muss die Klinke 169, die die Form einer Feder haben kann und entweder einstückig mit der Schublade ausgebildet ist oder getrennt davon hergestellt ist, nur angehoben werden, so dass die Bodenkante 162a der Öffnung freigegeben wird. Damit können die Schublade und der Becher zusammen auf den Schienen 164 in die innere Position gleiten.

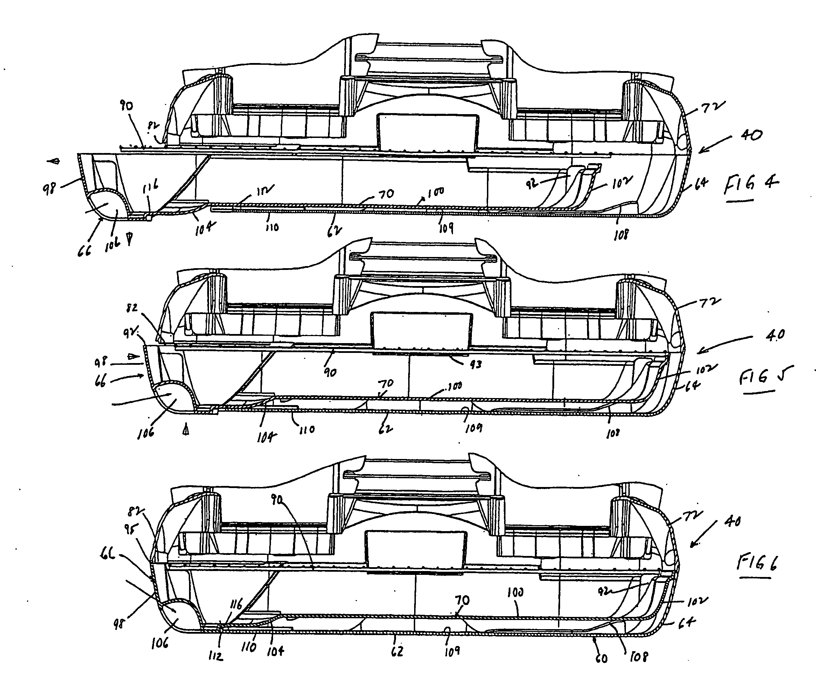

Fig. 10 zeigt eine Badestation 185, die mit der Öffnung 162 in dem Turm 44 ausgerichtet ist. Die Badestation weist Seitenflansche 187 ähnlich den Flanschen 168 an der Körnerschalenschublade 166 auf und hat eine Vorderwand 189 ähnlich der Vorderwand 173 des Körnerbehälters 172, so dass die Badestation in der Öffnung 162 befestigt werden kann, wenn die Schublade 166 und der Körnerbehälter 172 entfernt sind. Wie sich aus Fig. 11 ergibt, ist die Wanne 185a leicht für Vögel im Behälter zugänglich, wenn die Badestation 185 in dem Turm 44 eingesetzt ist. Wenn die Vögel darin baden, können sie leicht durch die Turmwand beobachtet werden. Das Bad enthält an seiner Innenkante vorzugsweise eine Sitzstange 185b, auf der sich ein Vogel beim Eintritt in oder beim Austritt aus dem Bad setzt. Die Badestation 185 kann leicht aus dem Turm entfernt werden, indem die Flansche 187 von den Schienen 164 abgenommen werden.

Gemäß einem anderen Aspekt der vorliegenden Erfindung kann ein Badeschild 300 gemäß Fig. 11 in dem Turm 44 oberhalb der Badestation 185 vorgesehen sein, um das Herausspritzen von Wasser in den Käfig und aus den Käfig heraus zu minimieren, wenn ein Vogel oder Vögel baden. Die Prallplatte 300 besteht typischerweise aus einer spritzgussgeformter Kunststoffplatte mit einer gekrümmten oberen Seite 302, die im wesentlichen der Krümmung des Turms folgt und nach unten sich erweiternde Kanten 304 und Ansätze 306 mit Spalten 308 nahe der Bodenkante 310 aufweisen, die in die Flügel 190 der Türme 44 eingreifen und sich zwischen den Drähten der Gitter neben jeder Seite des Turms erstrecken, so dass sie lösbar gehalten werden. Um diese Form eines Schildes zu befestigen, können die Gitter zunächst entfernt werden und nach Befestigung des Schildes im Turm wieder eingesetzt werden. Das Badeschild kann auf verschiedene Arten befestigt werden, z. B. mit Klemmen, Clips oder Klammern, die entweder mit dem Turm oder dem Schild einstückig ausgebildet sind und die jeweils in eine der benachbarten Komponenten der Käfiganordnung eingreifen. Vorzugsweise ist das Schild entfernbar, um die Reinigung zu erleichtern.

Fig. 9 zeigt eine Sitzstange 178, wie sie an der Innenseite jedes Turms 44 oberhalb der Öffnung 162, die die Schublade 166, den Körnerbehälter 172 und die Badestation 185 aufnimmt, befestigt werden kann. Die Sitzstange 178 ist leicht gebogen dargestellt und kann im Bogen entweder von oder zur inneren Oberfläche 179 des Turms 44 befestigt werden. In der dargestellten Ausführungsform trägt jede Sitzstange 178 einen Clip 180 an jedem Ende 182, der in einem Spalt 184 in den Seitenlaschen 186 an den Kanten des Turms 44 eingreift. Die Laschen sind flexibel genug, dass sie nach außen gedrückt werden können, so dass die Clips 180 der Sitzstange 178 mit den Spalten 184 ausgerichtet werden können. Die Sitzstange kann umgekehrt werden, um der Größe des Vogels, der im Gehäuse aufgenommen ist, angepasst zu sein. Da die Türme 44 vorzugsweise aus transparentem Kunststoff geformt sind, können Beobachter sehr nahe und mit freier Sicht auf den Vogel diesen beobachten, wenn er auf einer Sitzstange 178 Platz nimmt. Es ist zu betonen, dass auch andere Verbinder zur Befestigung der Sitzstangen in den Türmen verwendet werden können. Es ist außerdem darauf hinzuweisen, dass Fütterungsstangen als Teil der Fütterungsbehälterschublade ausgebildet sein können, entweder als einstückiges Teil davon oder getrennt und an der Schublade befestigt. Die Sitzstange sollte natürlich nahe dem Körnerbehälter angeordnet sein.

In Fig. 11 ist eine Art der Befestigung der Seiten-, Vorder- und rückwärtigen Gitter 46, 48 und 50 dargestellt. Es ist darauf hinzuweisen, dass viele andere Methoden verwendbar sind, wobei jedoch nur eine Methode dargestellt ist. Es ist hochgradig wünschenswert, dass bei jeder verwendeten Art die Gitter leicht zusammengesetzt und von dem Käfigrahmen entfernt werden können. In den dargestellten Ausführungsformen sind an jeder Seitenkante 192 jedes der Türme Turmflügel 190 vorgesehen, die sich von gerade unterhalb der Laschen 186 im wesentlichen zur Unterseite der Türme 44 (siehe z. B. Figuren 2 und 3) erstrecken. Mit den Flügeln 190 sind einstückig ein Paar von Gitterträgern 194 und 196 in Form von Haken ausgebildet. An jeder Seite sind jeweils zwei vorgesehen, die so ausgebildet sind, dass sie zwischen benachbarte horizontale Drähte des Gitters passen und in die damit zusammenwirkenden Drähte eingreifen. Zwei Gitterträger 194 und 196 an jeder Seite jedes Gitters, die vertikal beabstandet sind, sind ausreichend, um jedes Gitter festzuhalten. In einer ähnlichen Art kann das Frontgitter 50, das etwa die Hälfte der Höhe des Käfigs hat, durch beabstandete Stützen gehalten werden, die auf den Drähten einhaken. Als sonstige Mittel, die zur Befestigung der Gitter dienen können, kann die Verwendung von Clips, Hängevorrichtungen, Schnappbefestigungen, Klammern, usw. eingesetzt werden.

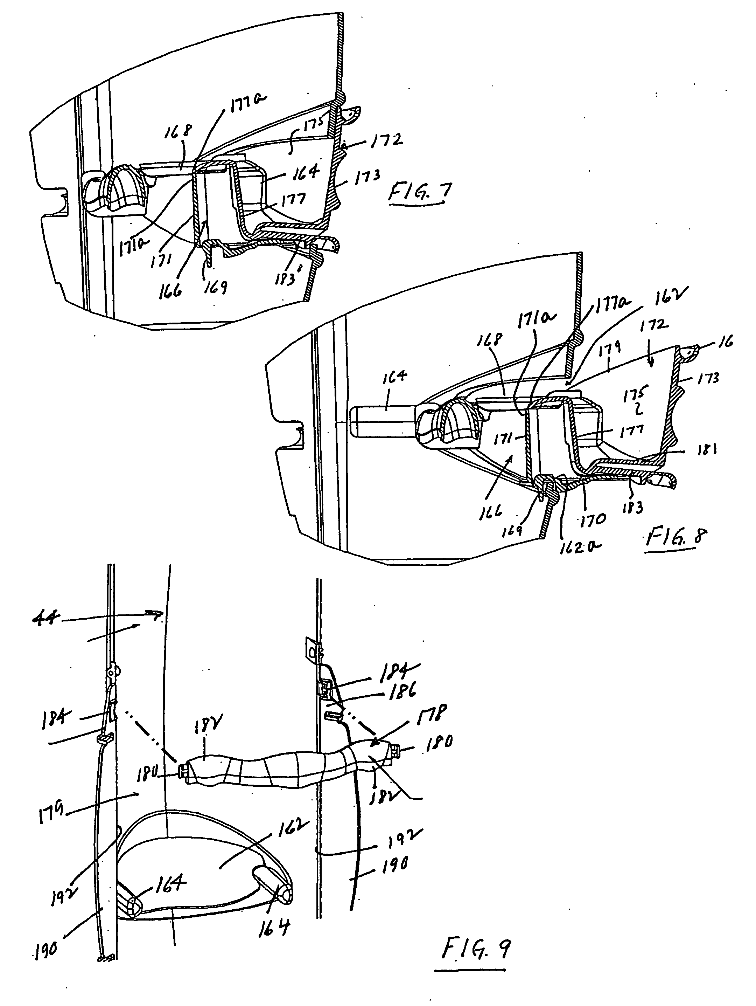

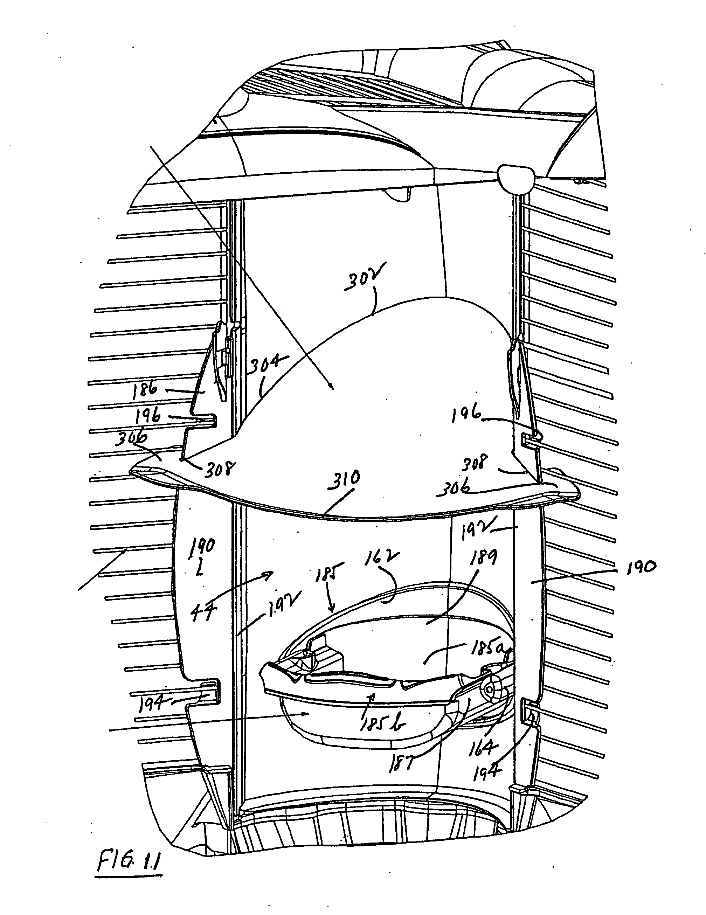

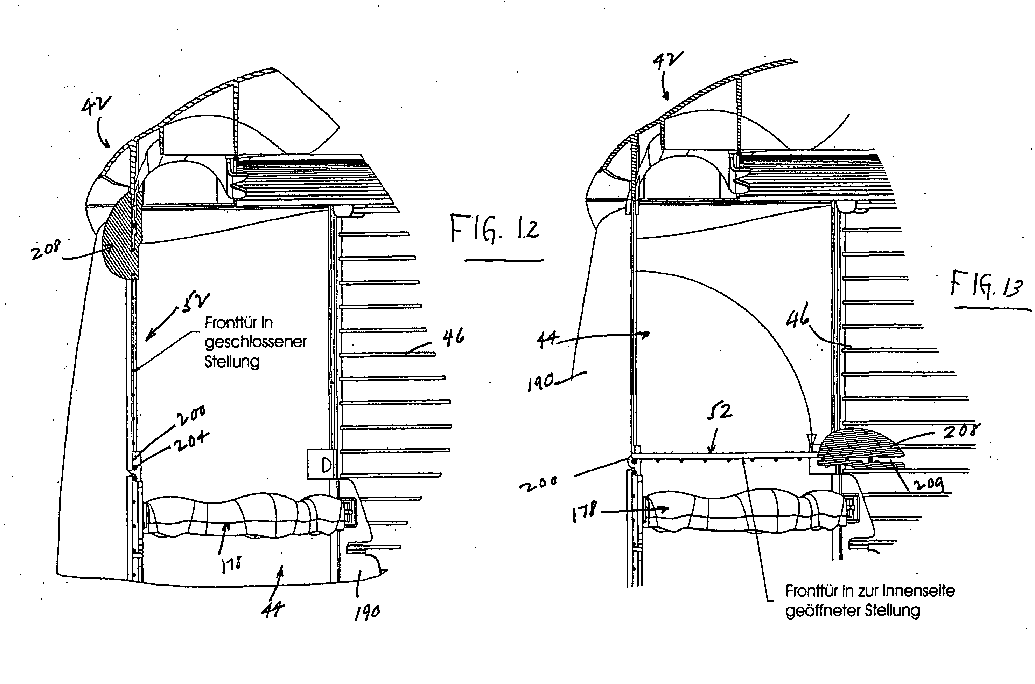

In den Figuren 12 - 14 ist ein anderer Aspekt der Erfindung im Detail dargestellt, der sich auf das Türgitter 52 bezieht. Das Türgitter 52 ist gemäß einer Ausführungsform der Erfindung drehbar gehalten, so dass es aus der geschlossenen Position von Fig. 12 in eine offene Position von Fig. 13 gedreht werden kann, wobei es etwa horizontal im Käfig ausgerichtet ist oder in eine offene Position von Fig. 14 gebracht werden kann, in der es aus dem Käfig heraushängt. In der speziellen dargestellten Konfiguration ist die Tür entlang der Bodenkante 200 durch Verlängerungen 202 (siehe Fig. 3) verbunden, die als Teil des Bodendrahts 204 des Türgitters ausgebildet sind. Die Verlängerungen 202 sind in Ausnehmungen 206 verankert, die sich entlang der Seitenkanten der Fronttürme 44 oberhalb der Flügel 190 etwa zwei Drittel von der Grundanordnung 40 erstrecken. Wenn das Türgitter an der Oberseite vom Käfig gelöst wird, kann das Türgitter nach unten in eine der offenen Positionen der Figuren 13 und 14 gedreht werden. Die Tür kann in der geschlossenen Position durch einen Knopf oder eine Klinke 208 gehalten werden, der oder die durch die oberen Drähte des Türgitters gehalten werden und in die Abdeckanordnung 42 gemäß den Figuren 1 und 12 eingreift. Die Klinke wird gedreht, um ihren Spalt 209 von der Kante des Vorderteils 140 der Abdeckung zu lösen, wenn die Tür geöffnet werden soll. Wenn die Tür sich in einer Position gemäß Fig. 13 befindet, in der sie sich nach innen öffnet, wird eine Plattform in dem Käfig gebildet, auf der ein Vogel absitzen kann, wenn er durch die offene Tür in den Käfig zurückkehrt. Die nach innen geöffnete Tür bewirkt auch die Ausbildung eines Labyrinths für Vögel, um zum Vergnügen heraufzuklettern und herumzufliegen (oberhalb und unterhalb). Wenn an den Seiten des Käfigs ähnliche Türen ausgebildet sind, die eine andere alternative Ausführungsform der Erfindung bilden, ergeben sich zusätzliche Lande- und Labyrinthflächen zum Vergnügen des Vogels.

Die Tür oder die Türen können in horizontaler Position auf unterschiedliche Weise gehalten werden. Z. B. können an den Kanten der Türme neben den Türgelenken im Weg der Seitendrähte der Gitter Flansche vorgesehen sein, wenn diese die horizontale Stellung erreichen, so dass die Tür oder Türen nicht unter diese Ebene bewegt werden können. Alternativ können geeignete Anschläge in die Gelenke eingebaut werden, um die horizontale Orientierung zu erreichen, oder die Türgitter können Anschläge enthalten, die unterhalb der Türen für den gleichen Zweck in die Türme eingreifen.

In Fig. 14 ist das Türgitter 52 in geöffneter Position dargestellt, in der es von der Drahtgelenkverlängerung 202 auf der Außenseite des Käfigs herunterhängt. Wenn sie in dieser Art geöffnet ist, steht die Tür nicht in beträchtlichem Abstand in den Raum um den Käfig herum ab und daher befindet sie sich nicht in einer Stellung, in der sie zufällig angestoßen werden kann. Während in der dargestellten Ausführungsform eine Tür nur auf der Vorderseite des Käfigs vorgesehen ist, kann die beschriebene gleiche Anordnung verwendet werden, um Türen an einer oder beider Seiten oder der Rückseite des Käfigs vornehmen oder kürzere feste Gitter und oberhalb in der dargestellten Art befestigte Gittertüren benutzt werden. Der in der dargestellten Ausführungsform (siehe Fig. 3) gezeigte Knopf 208 hat vorzugsweise einen konturierten Griff, um das Erfassen zwischen Daumen und Zeigefinger zu erleichtern, wenn er zum Schließen oder Öffnen der Tür gedreht wird. Es können andere Formen von Klinken verwendet werden, um eine ähnliche Funktion zu bewirken, wie z. B. Haken, Schnappverbindungen, Schiebebolzen usw..

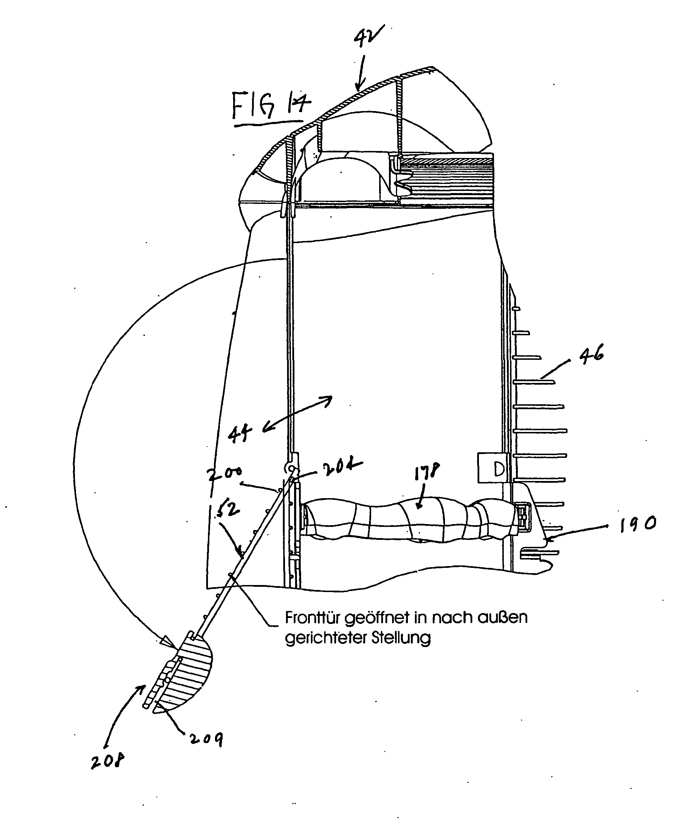

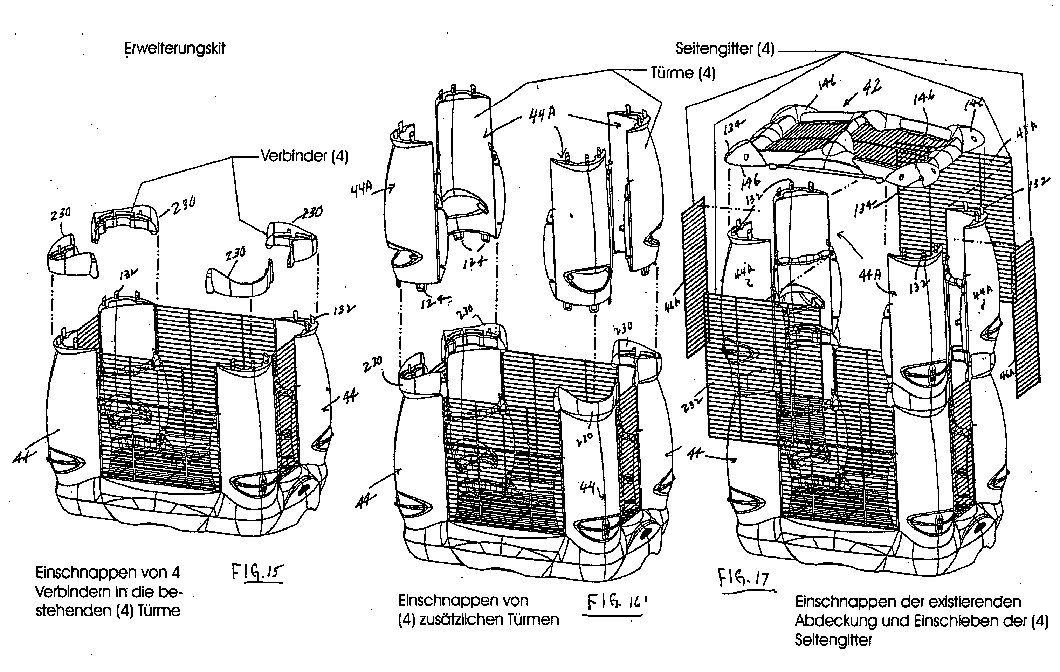

In den Figuren 15 - 17 ist eine Art der Erweiterung des Käfigs dargestellt. Gemäß diesem Aspekt der Erfindung kann in der gezeigten Ausführungsform die Höhe des Käfigs leicht erhöht werden, wobei alle Komponenten des Basisvogelkäfigs, z. B. gemäß Fig. 1, verwendet werden können. Die Erweiterung kann dadurch erreicht werden, dass Adapter 230, zusätzliche Türme 44A, die identisch oder nahezu gleich mit den Türmen 44 des Originalkäfigs sind, und zusätzliche Seitengitter 46A, ein Rückwandgitter 48A und ein Frontgitter 232 verwendet werden (wobei alternativ ein Frontgitter und eine Gittertür verwendet werden können, die im wesentlichen gleich jedoch länger als diejenigen im Grundkäfig und dort im Detail beschrieben, ausgebildet sind). Um die Erweiterungskomponenten mit dem Grundkäfig zusammenzusetzen, wird die Abdeckanordnung 42 von dem Grundkäfig abgenommen, indem die Verbinder 132 auf den Oberseiten der Türme 44 von den Öffnungen 134 in den Ecken 146 der Abdeckung entfernt werden und auf die Oberseiten der Türme die Adapter 230 aufgesetzt werden, die nicht dargestellte Öffnungen enthalten, die die Verbinder 132 auf der Oberseite der Türme aufnehmen. In Fig. 15 ist ein Adapter 230 für jeden der Türme vorgeschlagen und in eingesetzter Stellung in Fig. 16 dargestellt. Die Adapter 230 selbst weisen Ausnehmungen auf (nicht dargestellt), die die Verbinder 124 an der Unterseite der Erweiterungstürme 44A aufnehmen, so dass sie, wie in Fig. 17 vorgeschlagen, eingeschnappt werden können. Nach der Installation der zusätzlichen Türme 44A kann die Abdeckanordnung 42 auf die Verbinder 132 an der Oberseite der Erweiterungstürme 44A aufgeschnappt werden in gleicher Weise, wie die Abdeckanordnung auf den Originaltürmen 44 befestigt war. Es ist darauf hinzuweisen, dass das obere Gitter 156 in der Abdeckanordnung 42 an seinem Ort verbleiben kann und kein zusätzliches oberes Gitter erforderlich ist. Wenn das Grundgerüst des Käfigs auf die dargestellte Weise zusammengesetzt ist, können die Seiten-, Rück- und Frontgitter 46A, 48A und 234 an ihrem Ort befestigt werden, genau wie oben bei der Käfiggrundanordnung beschrieben, um die Erweiterung zu vervollständigen.

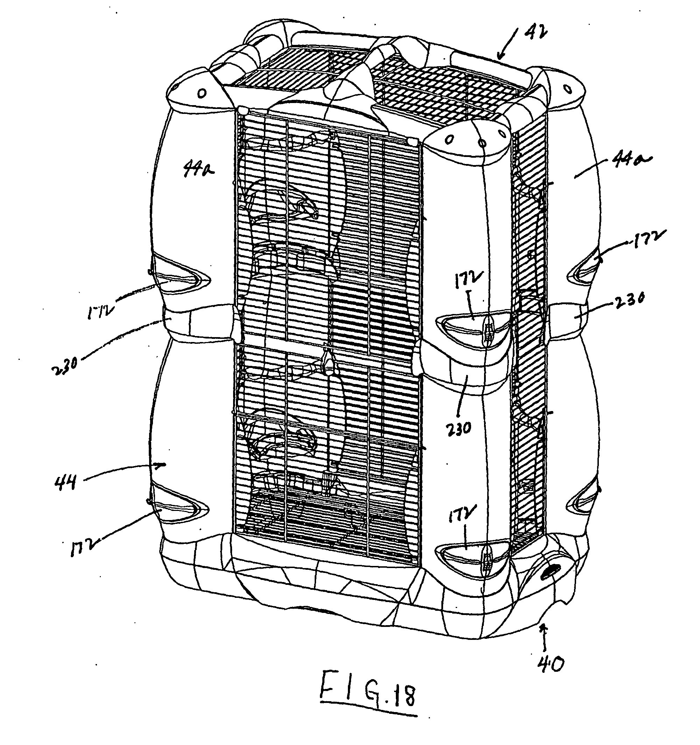

Es ist darauf hinzuweisen, dass die Adapter 230, die Erweiterungstürme 44A und die Gitter 46A, 48A und 234 als von den Komponenten des Grundkäfigs separates Kit verkauft oder anderweitig vertrieben werden können. Es ist ebenfalls darauf hinzuweisen, dass die Erweiterungstürme nicht identisch mit den ursprünglichen Türmen sein müssen, was zu unterschiedlichen Seiten-, Rückwand- und Frontgittern führt und dass in der Tat der Käfig mit mehr als einer zusätzlichen Etage von Türmen und Gittern erweitert werden kann, um eine große Bandbreite von Käfiggrößen zu erreichen. Die Erweiterungstürme 44A können in unterschiedlichen Höhen, größer oder kleiner als die Originale, angeboten werden. Während die dargestellten zusätzlichen Türme darüber hinaus Öffnungen für Körnerbehälter und Schubfächer aufweisen, können diese in einigen oder allen Erweiterungstürmen auch weggelassen werden. Es ist auch zu betonen, dass in der Front und in den Seiten der Erweitungsteile des Käfigs Türen vorgesehen sein können. Ein voll zusammengesetzter erweiterter Vogelkäfig ist in Fig. 18 dargestellt.

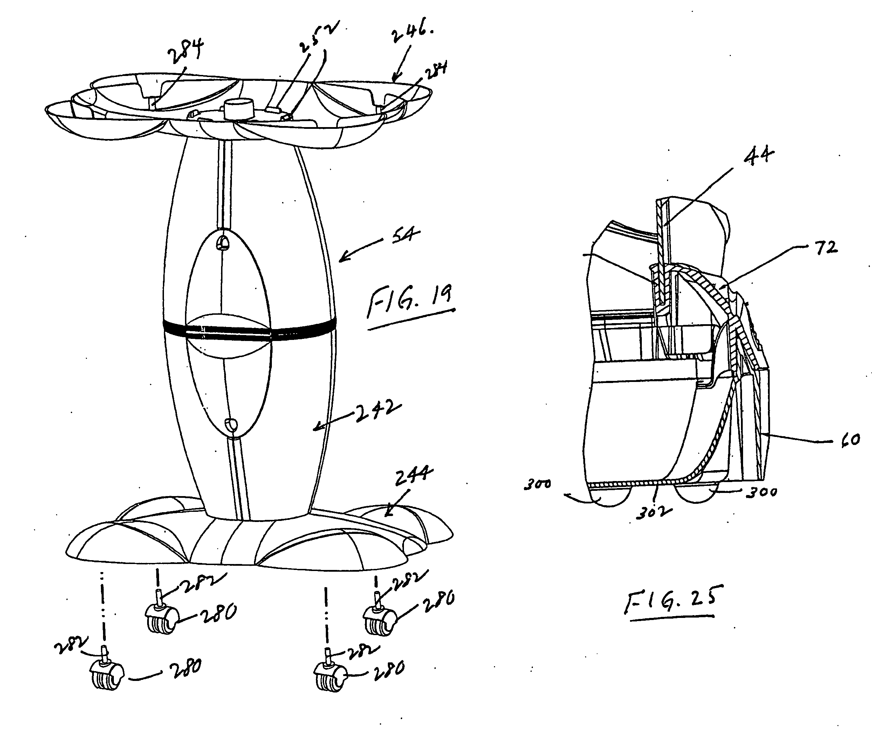

In den Figuren 19 - 24 ist eine Ausführungsform eines Käfigständers 54 im Detail und getrennt von dem Käfig dargestellt. In Fig. 19 enthält der Ständer 54 eine Säule 242, eine Grundplatte 244 und eine Plattform 246. Gemäß diesem Aspekt der Erfindung können die Grundplatte 244 und die Plattform 246 identisch sein, jedoch zueinander umgekehrt. Für kleinere Versionen des Käfigs kann die obere Plattform 246 jedoch kleiner als die Grundplatte 244 sein und sie müssen nicht gleich sein.

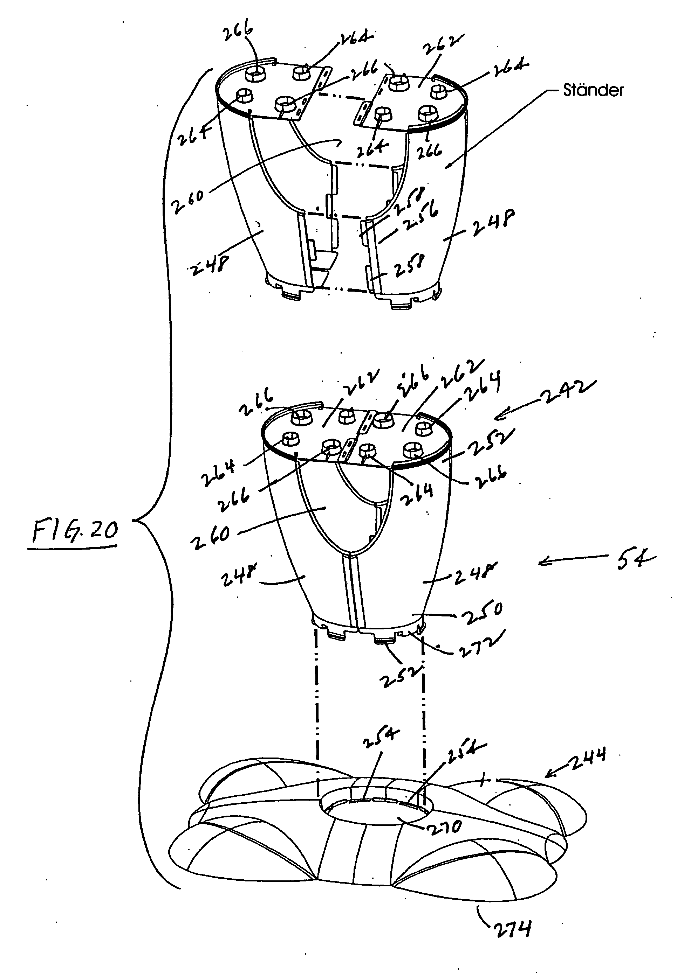

Die Säule 242 in Fig. 20 ist aus vier Komponenten 248 zusammengesetzt so dargestellt, dass sie in der illustrierten Ausführungsform identisch, jedoch in unterschiedlichen Positionen orientiert sind, wenn sie zur Bildung einer Säule zusammengesetzt sind. Die Grundplatte 244, die Plattform 246 und die Komponenten 248 sind vorzugsweise aus geformten Kunststoffteilen erstellt. Die Komponenten 248 sind jeweils im wesentlichen halbkreisförmig oder im Querschnitt U-förmig ausgebildet und vergrößern sich graduell von den kleineren zu den größeren Enden 250 bzw. 252. Das kleinere Ende 250 jeder Komponente 248 enthält verschiedene Befestiger 252, die sich nach unten erstrecken, wenn sie mit dem kleineren Durchmesserende in der unteren Position orientiert sind. Diese sind so ausgebildet sind, dass sie in Flansche 254 in der Grundplatte 244 eingreifen, um die unteren Komponenten an der Grundplatte zu halten. Zwei Komponenten 248 bilden die untere Hälfte der Säule 242 und zwei zusätzliche invertierte Komponenten bilden zusammen deren obere Hälfte. Die Seitenränder 256 der Komponenten 248 tragen Befestigungsflansche 258, die mit entsprechenden Elementen benachbarter Komponenten zusammenwirken, um zwei Komponenten zusammenzusetzen. Die Ränder 256 jeder Komponente erstrecken sich etwa über eine Hälfte der Höhe und der verbleibende Bereich jeder Seitenkante wird so frei gehalten, dass die anliegenden Kanten eine Öffnung 260 ergeben. Jede Komponente 248 enthält auch eine horizontale Wand 262, die im wesentlichen das längere Enden 252 jeder Halbsäule abschließt, wenn zwei benachbarte Komponenten, wie in Fig. 20 dargestellt, zusammengesetzt werden. Die horizontalen Wände 262 tragen Kragen 264 und 266 mit kleinerem und größerem Durchmesser. Diese ermöglichen es, dass zwei zusammengesetzte Halbsäulen jeweils aus zwei verbundenen Komponenten gebildet werden, wie weiter oben beschrieben, um die volle Säule 242 zu bilden.

Die Grundplatte 244 des Ständers weist eine eliptische Öffnung 270 (siehe Fig. 20) auf, die den Flansch 272 aufnimmt, der die Befestiger 252 am kleineren Ende des zusammengesetzten Komponentenpaares trägt, so dass die Befestiger 252 in die Flansche 254 eingreifen können. Die Grundplatte 244 weist eine horizontale Umfangskante 274 auf, die als sicherer Halter für den Ständer dient, wenn dieser auf dem Boden abgestellt ist. Wie in Fig. 19 vorgeschlagen, kann die Grundplatte 244 mit Schwenkfüßen 280 versehen sein, die Stifte 282 enthalten, die in Buchsen 284 an der Unterseite des Ständers aufgenommen sind. Die Buchsen sind in Fig. 19 in der umgekehrten oberen Plattform 246 gezeigt.

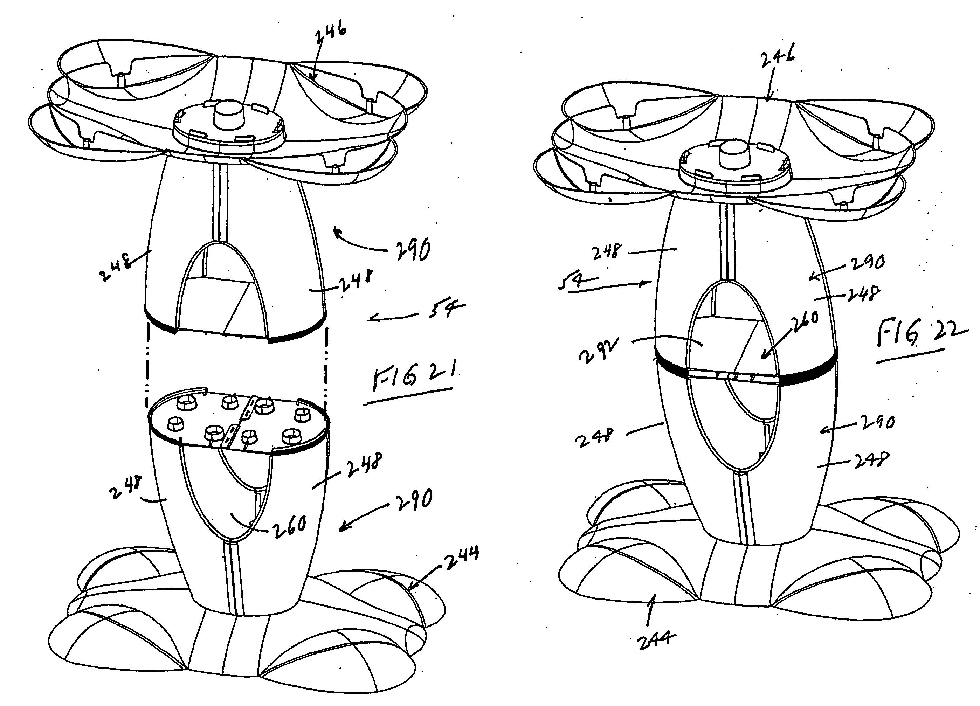

Fig. 20 zeigt, wie eine Ständerhälfte 54 zusammengesetzt wird. Der komplette Ständer besteht in der dargestellten Ausführungsform aus zwei im wesentlichen identischen Teilanordnungen, wie in Fig. 21 dargestellt, in der Annahme, dass die Grundplatte 244 und die Plattform 246 identisch sind. In dieser Figur werden die beiden Anordnungen 290, die jeweils aus zwei Komponenten 248 und einer Grundplatte 244 (oder Plattform 246) zusammengesetzt sind, miteinander verbunden, so dass die größeren Kragen 266 in jeder Teilanordnung 290 die gegenüberliegenden kleineren Kragen 264 aufnehmen. Es ist ersichtlich, dass wegen der gestapelten Beziehung der kleineren und größeren Verbindungskragen die kleineren und größeren Kragen miteinander ausgerichtet sind, wenn eine Teilanordnung umgekehrt wird. Wenn die beiden wie in Fig. 22 zusammengebracht werden, wird eine einheitliche Struktur erzeugt, die einen sicheren Stand des Käfigs bewirken. Es ist darauf hinzuweisen, dass die Wände 262, die die Kragen 264 und 266 tragen, eine Ablage 292 quer über die Mitte der zusammengesetzten Säule bilden, die durch die Öffnungen 260 zugänglich ist.

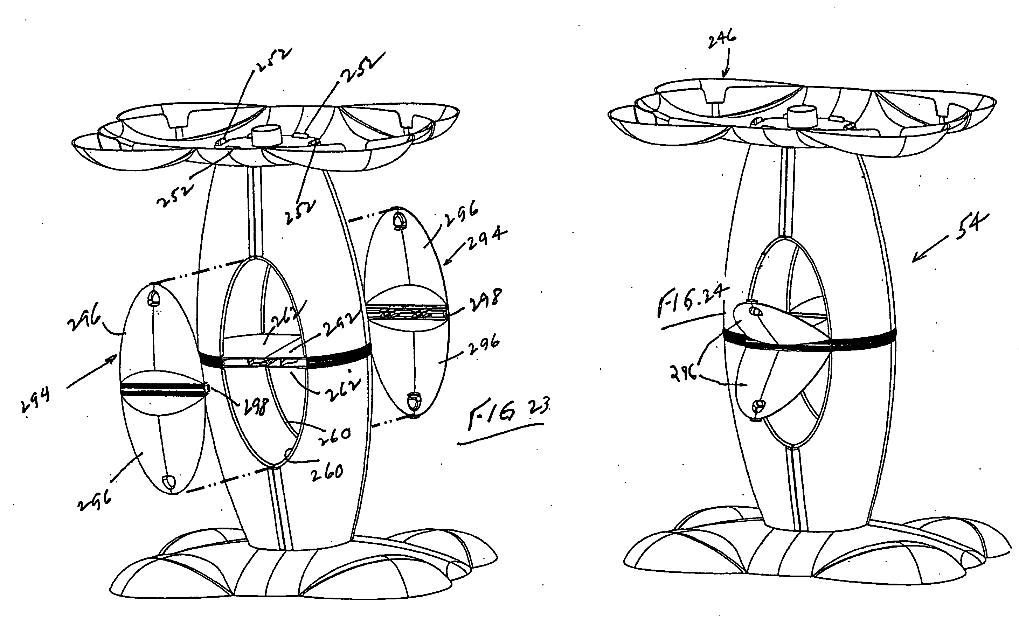

In den Figuren 23 und 24 sind Teilausbildungen 294 einer Tür dargestellt, die jeweils aus zwei Türen 296 gebildet sind, die über die Öffnungen 260 über Haken 298 die Kanten der Ablage 292 in dem Raum zwischen den Wänden 262 umgreifen. Die Türen 296 sind miteinander verlinkt, so dass sie jeweils unabhängig voneinander geöffnet oder geschlossen werden können (siehe die offene Position der Türen in Fig. 24 und die geschlossene Position in Fig. 19). Alternative Methoden zur Befestigung der Tür 296 können vorgesehen sein und unterschiedliche Klinkenanordnung können verwendet werden, wie z. B. Verschiebeverschlüsse, Reibverschlüsse, usw., um die Türen in geschlossener Position zu halten. Der Raum in der Säule 242 kann verwendet werden, um Körner oder anderes Vogelfutter sowie jede Art von sonstigem Käfigzubehör unterzubringen. Um die Stabilität des Ständers zu erhöhen, können Sandsäcke oder Wassersäcke in der Säule 242 untergebracht werden und insbesondere in der unteren Hälfte, so dass der Schwerpunkt der Anordnung nach unten verschoben wird.

Die Plattform 246 ist besonders geformt, um die Basis 60 des zusammengesetzten Käfigs aufzunehmen. Z. B. kann die Basis 60 des Käfigs eine Zahl von Füßen enthalten, wie z. B. halbkreisförmige Vorsprünge (siehe Fig. 25) an der Unterseite 302, die in einer Ebene liegen und geeignet sind, auf einer flachen Bodenfläche zu ruhen, wenn der Käfig ohne einen Ständer verwendet wird. Die gleichen Füße können mit Ausnehmungen (nicht dargestellt) in der Oberseite der Plattform 246 ausgerichtet sein, um eine stabile Verbindung zwischen dem Käfig und dem Ständer zu bewirken, wenn der Ständer verwendet wird. Die Füße können unterschiedliche Formen aufweisen, sie sollten jedoch geeignet sein, um auf einer Möbeloberfläche zu stehen, ohne dass diese beschädigt wird und sie sollten leicht mit passenden Verbindungen in der Ständerplattform ausrichtbar sein, so dass der Käfig leicht und bequem davon entfernt werden kann und nach Wunsch auf dem Ständer befestigt werden kann.

In der vorstehenden Beschreibung sind wesentliche Details bezüglich der Art dargestellt worden, in der verschiedene Komponenten des Käfigs und des Ständers miteinander verbunden werden können. Es ist darauf hinzuweisen, dass der Kern der Erfindung nicht auf diese Details beschränkt ist. Während z. B. bevorzugte Verfahren der Verbindung der Türme 44 mit der Grundanordnung 40 und der Abdeckanordnung 42 beschrieben und dargestellt sind, können andere Ausführungen verwendet werden, um diese Elemente zusammenzusetzen, wie z. B. Halter, Klammern, Schrauben, usw.. Das gleiche gilt für die Verbindungen der verschiedenen Elemente der Grundanordnung 40, des Ständers 54, der Fütterungsstation 160, der Gitter und der Käfigerweiterungskomponenten. Der Kern der Erfindung ist daher nicht auf die speziellen Ausführungsformen, die dargestellt und beschrieben sind, beschränkt. Der Schutzumfang der Erfindung ergibt sich aus den nachstehenden Ansprüchen und deren.

### Bezugszeichen

- 30: Vogelkäfig
- 40: Grundanordnung
- 42: Abdeckung
- 42a: Abdeckung
- 44: Türme
- 44A: Turm
- 46: Seitengitter
- 46A: Seitengitter
- 48: Rückwandgitter
- 48A: rückwärtiges Gitter
- 50: Frontgitter
- 52: Türgitter
- 54: Ständer
- 60: Basis
- 61: Vorderseite
- 62: Bodenwand
- 64: Seitenwand
- 66: Schale
- 68: Umfangswand
- 70: Schalenboden
- 72: Abdeckung
- 74: Seitenteil
- 76: Vorderteil
- 78: Rückenteil
- 79: Kante
- 82: Kante
- 84: Seitenteil
- 86: Verbindungsteil
- 87: Flansch
- 88: Öffnung
- 90: Bodengitter
- 92: Flansch
- 93: Flansch
- 94: Drähte
- 95: Vorderkante
- 96: Drähte
- 98: Frontabschnitt
- 100: Bereich
- 102: Wandabschnitt
- 104: Rampe
- 106: Fingergriff
- 108: Rampe
- 109: Oberseite
- 110: Vorderseite
- 112: Leiste
- 116: Kerbe
- 120: Ausnehmungen
- 122: Kante
- 124: Verbinder
- 126: Aufnahme
- 130: Kante
- 132: Verbinder
- 132a: Verbinder
- 133: Ausrichtstifte
- 134: Öffnungen
- 135: Ausnehmung
- 135a: Ausnehmung
- 140: Teil
- 142: Teil
- 144: Seitenteil
- 146: Eckstück
- 146a: Eckstück
- 150: Tragegriff
- 151: Aufhänger
- 152: Schienen
- 154: Kante
- 156: Drahtgitter
- 160: Futterstation
- 161: Ende
- 162: Öffnung
- 162a: Bodenkante
- 164: Schienen
- 166: Schublade
- 168: Flansch
- 169: Federklinke
- 170: Plattform
- 171: Wand
- 171 a: Oberkante
- 172: Futter- oder Körnerschale
- 173: Wand
- 173a: Griff
- 175: Körnerbehälter
- 177: Innenwand
- 177a: Vorderkante
- 178: Sitzstange
- 179: Seitenwand
- 180: Clip
- 181: Containerbodenwand
- 182: Ende
- 183: Federhaken
- 183a: Griff
- 183b: Flansch
- 184: Spalt
- 185: Badestation
- 185a: Wanne
- 185b: Sitzstange
- 186: Seitenlasche
- 187: Flansch
- 189: Vorderwand
- 190: Flügel
- 192: Seitenkante
- 194: Gitterträger
- 196: Gitterträger
- 200: Bodenkante
- 202: Verlängerung
- 204: Bodendraht
- 206: Ausnehmungen
- 208: Knopf
- 209: Spalt
- 230: Adapter
- 232: Frontgitter
- 234: Gitter
- 242: Säule
- 244: Grundplatte
- 246: Plattform
- 248: Komponenten
- 250: Ende
- 252: Ende
- 254: Flansch
- 256: Seitenränder
- 258: Befestigungsflansch
- 260: Öffnung
- 262: Wand
- 264: Kragen
- 266: Kragen
- 270: Öffnung
- 272: Flansch
- 274: Kante
- 280: Schwenkfuß
- 282: Stift
- 284: Buchsen
- 290: Anordnung
- 292: Ablage
- 294: Teilausbildungen
- 298: Haken
- 300: Badeschild
- 302: Unterseite
- 304: Kante
- 306: Ansatz
- 308: Spalte
- 310: Bodenkante

## Patentansprüche

1. Vogelkäfig (30) mit einer Basis (60), voneinander beabstandeten Türmen (44), die sich vom Umfang der Basis (60) nach oben erstrecken, einer mit den Oberseiten der Türme (44) verbindbaren Abdeckung (42), um die Oberseite des Käfigs (30) zu schließen, und mit Gittern (46, 48, 50), die zwischen den Türmen (44) befestigt sind, um den Umfang des Käfigs (30) zu schließen, **dadurch gekennzeichnet, dass** die Türme (44) aus lichtdurchlässigem, insbesondere transparentem Material gebildet sind, um einen Vogel in dem Käfig (30) durch die Türme (44) beobachten zu können, und dass die Abdeckung (42) einen Kunststoffrahmen mit vorderen (140), rückwärtigen (142) und Seitenteilen (144) aufweist, die eine Öffnung mit dem Rahmen bilden, wobei ein Drahtgitter (156) an dem Rahmen befestigt ist, dass die Öffnung schließt.

2. Vogelkäfig (30) nach Anspruch 1 bei dem die Basis (60), die Türme (44), die Abdeckung (42) und die Gitter (46 ,48, 50) auseinandernehmbar sind.

3. Vogelkäfig (30) nach Anspruch 1 oder 2, bei dem wenigstens einer der Türme (44) eine Fütterungsstation (160) mit einer Futterschale (172) enthält, die in und aus dem Turm (44) bewegbar ist, um die Schale (172) von außerhalb des Käfigs (30) ohne Entfernung vom Turm (44) befüllen zu können.

4. Vogelkäfig (30) nach Anspruch 3, bei dem die Türme (44) im wesentlichen C-förmig ausgebildet sind und breiter als die Schale (172) sind, um zu vermeiden, dass Futter aus dem Käfig (30) geworfen wird.

5. Vogelkäfig (30) nach Anspruch 3, bei dem an den Türmen (44) an der Innenseite des Käfigs (30) entfernbare Sitzstangen (178) ausgebildet sind.

6. Vogelkäfig (30) nach einem der Ansprüche 1 - 5, bei dem die Basis (60) eine entfernbare Bodenschale (70) aufweist und oberhalb der Bodenschale (70) ein Bodengitter (90) und eine Abdeckung (72) vorgesehen sind, die eine Schublade und das Bodengitter (90) umgeben, um Vogelabfälle in die Bodenschale (70) abzulenken.

7. Vogelkäfig (30) nach Anspruch 6, bei dem das Bodengitter (90) in einer Schale (66) gehalten wird, wenn die Schale (66) sich in der Basis (60) befindet und aus der Schale (66) entfernbar ist, wenn die Schale (66) wenigstens teilweise aus der Basis (60) herausgezogen ist.

8. Vogelkäfig (30) nach Anspruch 7, bei dem die Schale (66) in der Grundanordnung größer als der Bodenbereich des Lebensbereichs eines Vogels im Käfig (30) ist, um Vogelabfall in dem Käfig (30) zu sammeln.

9. Vogelkäfig (30) nach einem der Ansprüche 1 - 8, bei dem zusätzliche Türme (44a) entfernbar auf die Türme (44) eines Vogelkäfigs (30) aufsetzbar sind, um die Höhe des Käfigs (30) zu erhöhen und die Abdeckung (42) wahlweise entweder auf die ersten vertikalen Türme (44) oder die zusätzlichen Türme (44a) aufsetzbar ist.

10. Vogelkäfig (30) nach Anspruch 1, bei dem der Rahmen einen Handgriff (150) zum Tragen des Käfigs (30) aufweist.

11. Vogelkäfig (30) nach Anspruch 1, bei dem der Rahmen einen Aufhänger (151) zum Aufhängen des Käfigs (30) aufweist.

12. Vogelkäfig (30) nach einem der Ansprüche 1 - 11, bei dem eines der Gitter (46, 48, 50) an seiner Oberseite unterhalb der Abdeckung (42) endet und oberhalb des Gitters eine Gittertür (52) zwischen einer offenen und einer geschlossenen Position bewegbar befestigt ist.

13. Vogelkäfig (30) nach Anspruch 12, bei dem sich die Gittertür (52) im offenen Zustand in einer horizontalen Position innerhalb des Käfigs (30) befindet.

14. Vogelkäfig (30) nach Anspruch 12, bei dem die Tür (52) nach außen kippbar ausgebildet ist und sich nach unten aus dem Käfig (30) parallel zum Frontgitter (50) des Käfigs (30) erstreckt.

15. Vogelkäfig (30) nach einem der vorhergehenden Ansprüche, bei dem der Käfig (30) von einem Ständer (54) getragen wird, wobei der Ständer (54) eine Säulenoberseite und einen Bodenbereich aufweist, die im Wesentliche identisch, jedoch übereinander in umgekehrter Anordnung zusammengesetzt sind.

16. Vogelkäfig (30) nach Anspruch 15, bei dem jedes der Säulenteile zwei identische Bereiche aufweist, die in ihrem Säulenbereich gleichartig ausgebildet sind.

17. Vogelkäfig (30) nach Anspruch 15, bei dem in der Säule eine Speicherkammer ausgebildet ist.

18. Vogelkäfig (30) nach Anspruch 1, bei dem der Rahmen der Abdeckung (42) transparent ist.

19. Vogelkäfig (30) nach Anspruch 3, bei dem die Futterschale (172) durch eine Schublade (166) gehalten ist, die zwischen einer inneren Stellung, in der die Schale (172) einem Vogel in dem Käfig (30) zugänglich ist, und einer äußeren Position verschiebbar ist, in der die Schale (172) von außerhalb des Käfigs (30) mit Futter gefüllt werden kann.

20. Vogelkäfig (30) nach Anspruch 19, bei dem in einer Schublade (166) ein Vogelbad (185) befestigbar ist.

## Claims

1. A bird cage (30) with a base (60), spaced apart towers (44) extending upwardly from the periphery of the base (60), a cover (42) connectable to the tops of the towers (44) for closing the upper part of the cage (30), and with grills (46, 48, 50) disposed between the towers (44) for closing the periphery of the cage (30), **characterized in that** the towers (44) are made of a light pervious, particularly transparent material for enabling a bird in the cage (30) to be viewed through the towers (44), and that the cover (42) contains a plastic frame with front (140), back (142) and side members (144), providing an opening with the frame, whereas a wire grill (156) is mounted on the frame and closing the opening.

2. A bird cage (30) according to claim 1 wherein the base (60), the towers (44), the cover (42) and the grills (46, 48, 50) are detachably connected.

3. A bird cage (30) according to claim 1 or 2 wherein at least one of the towers (44) contains a feeding station (160) with a seed cup (172) which is movable into and out of the tower (44), to be filled from outside the cage (30) without detaching it from the tower (44).

4. A bird cage (30) according to claim 3 wherein the towers (44) are generally C-shaped and wider than the cup (172) for impeding seed from being ejected from the cage (30).

5. A bird cage (30) according to claim 3 wherein perches (178) are removably mounted on the towers (44) inside the cage (30).

6. A bird cage (30) according to one of the claims 1 - 5 wherein the base assembly (60) is provided with a removable bottom tray (70) above which a bottom grill (90) and a cover (72) are provided which surround a drawer and the bottom grill (90) to deflect bird waste into the bottom tray (70).

7. A bird cage (30) according to claim 6 wherein the bottom grill (90) is disposed in a tray (66) when the tray (66) is in the base (60) and removable from the tray (66) when the tray (66) is at least partially withdrawn from the base (60).

8. A bird cage (30) according to claim 7 wherein the tray (66) in the base assembly is larger than the bottom area of the sphere of a bird in the cage (30) to collect bird waste in the cage (30).

9. A bird cage (30) according to one of claims 1 - 8 wherein additional towers (44a) are removably attached onto the towers (44) of a bird cage (30) in order to increase the height of the cage (30), wherein the cover (42) is optionally to be attached either onto the first vertical towers (44) or onto the additional towers (44a).

10. A bird cage (30) according to claim 1 wherein the frame has a handle (150) for carrying the cage (30).

11. A bird cage (30) according to claim 1 wherein the frame has a hanger (151) for suspending the cage (30).

12. A bird cage (30) according to one of the claims 1 - 11 wherein one of the grills (46, 48 50) ends at its top side below the cover (42) and wherein there is a grill door (52) above the grill movably mounted between an open and a closed position.

13. A bird cage (30) according to claim 12 wherein the grill door (52) in an open state is in a horizontal position within the cage (30).

14. A bird cage (30) according to claim 12 wherein the door (52) is pivotable outwardly and extends downwards from the cage (30) parallel to the front grill (50) of the cage (30).

15. A bird cage (30) according to one of the preceding claims wherein the cage (30) is carried by a column (54), wherein the column (54) has a column top side and a bottom area which are basically identical but are put together one upon the other in reverse arrangement.

16. A bird cage (30) according to claim 15 wherein each of the column parts has two identical portions which are constructed similarly in their column area.

17. A bird cage (30) according to claim 15 wherein there is a storage chamber designed in the column.

18. A bird cage (30) according to claim 1 wherein the frame of the cover (42) is transparent.

19. A bird cage (30) according to claim 3 wherein the seed cup (172) is held by a drawer (166) which is movable between an inner position in which it is accessible to a bird in the cage (30) and an outer position in which the seed cup (172) can be filled with feed from outside the cage (30).

20. A bird cage (30) according to claim 19 wherein a bird bath (185) is mountable into a drawer (166).

## Revendications

1. Cage à oiseaux (30) avec une base (60), des tourelles (44) espacées les unes des autres qui s'étendent vers le haut à partir du périmètre de la base (60), un recouvrement (42) qui est apte à être relié au côté supérieur des tourelles (44) pour fermer le côté supérieur de la cage (30), et des grilles (46, 48, 50) qui sont fixées entre les tourelles (44) pour fermer le périmètre de la cage (30), **caractérisée en ce que** les tourelles (44) se composent d'une matière translucide, en particulier transparente, afin de permettre d'observer un oiseau dans la cage (30) à travers lesdites tourelles (44), et **en ce que** le recouvrement (42) comporte un cadre en matière plastique avec des éléments avant (140), arrière (142) et latéraux (144) qui définissent une ouverture avec le cadre, un grillage (156) qui ferme l'ouverture étant fixé au cadre.

2. Cage à oiseaux (30) selon la revendication 1, dans laquelle la base (60), les tourelles (44), le recouvrement (42) et les grilles (46, 48, 50) sont démontables.

3. Cage à oiseaux (30) selon la revendication 1 ou 2, dans laquelle l'une au moins des tourelles (44) contient une station de nourriture (160) avec une mangeoire (172) qui peut être rentrée dans la tourelle (44) et sortie de celle-ci pour permettre de la remplir de l'extérieur de la cage (30) sans l'enlever de la tourelle (44).

4. Cage à oiseaux (30) selon la revendication 3, dans laquelle les tourelles (44) ont sensiblement la forme d'un C et sont plus larges que la mangeoire (172) afin d'éviter les projections de nourriture hors de la cage (30).

5. Cage à oiseaux (30) selon la revendication 3, dans laquelle des perchoirs amovibles (178) sont formés sur les tourelles (44), sur le côté intérieur de la cage (30).

6. Cage à oiseaux (30) selon l'une des revendications 1 à 5, dans laquelle la base (60) présente une cuvette inférieure amovible (70) et il est prévu au-dessus de cette cuvette (70) une grille inférieure (90) et un recouvrement (72) qui entoure un tiroir et la grille (90) pour dévier les fientes vers la cuvette (70).

7. Cage à oiseaux (30) selon la revendication 6, dans laquelle la grille inférieure (90) est fixée dans une cuvette (66) quand celle-ci se trouve dans la base (60), et peut être enlevée de ladite cuvette (66) quand celle-ci est sortie au moins partiellement de la base (60).

8. Cage à oiseaux (30) selon la revendication 7, dans laquelle la cuvette (66), dans sa position de base, est plus grande que la zone inférieure de la zone où vit un oiseau dans la cage (30), afin de recueillir les fientes dans la cage (30).

9. Cage à oiseaux (30) selon l'une des revendications 1 à 8, dans laquelle des tourelles supplémentaires (44a) sont aptes à être posées de manière amovible sur les tourelles (44) d'une cage (30) afin d'augmenter la hauteur de la cage (30), et le recouvrement (42) est apte à être posé au choix soit sur les premières tourelles verticales (44), soit sur les tourelles supplémentaires (44a).

10. Cage à oiseaux (30) selon la revendication 1, dans laquelle le cadre présente une poignée (150) pour porter la cage (30).

11. Cage à oiseaux (30) selon la revendication 1, dans laquelle le cadre présente un dispositif de suspension (151) pour suspendre la cage (30).

12. Cage à oiseaux (30) selon l'une des revendications 1 à 11, dans laquelle l'une des grilles (46, 48, 50) se termine, au niveau de son côté supérieur, au-dessous du recouvrement (42) et une porte grillagée (52) est fixée de manière mobile, au-dessus de la grille, entre une position ouverte et une position fermée.

13. Cage à oiseaux (30) selon la revendication 12, dans laquelle la porte grillagée (52), en position ouverte, se trouve dans une position horizontale à l'intérieur de la cage (30).

14. Cage à oiseaux (30) selon la revendication 12, dans laquelle la porte (52) est conçue pour pouvoir basculer vers l'extérieur et s'étend vers le bas à partir de la cage (30), parallèlement à la grille avant (50) de la cage (30).

15. Cage à oiseaux (30) selon l'une des revendications précédentes, qui est portée par un support (54), le support (54) présentant un côté supérieur formant colonne et une zone inférieure qui sont sensiblement identiques, mais qui sont assemblés l'un sur l'autre de manière inversée.

16. Cage à oiseaux (30) selon la revendication 15, dans laquelle chacune des parties formant colonnes présente deux zones identiques qui ont la même forme dans leur zone de colonne.

17. Cage à oiseaux (30) selon la revendication 15, dans laquelle une chambre de stockage est formée dans la colonne.

18. Cage à oiseaux (30) selon la revendication 1, dans laquelle le cadre du recouvrement (42) est transparent.

19. Cage à oiseaux (30) selon la revendication 3, dans laquelle la mangeoire (172) est fixée grâce à un tiroir (166) qui est mobile entre une position intérieure dans laquelle la mangeoire (172) est accessible pour un oiseau dans la cage (30), et une position extérieure dans laquelle la mangeoire (172) peut être remplie de nourriture de l'extérieur de la cage (30).

20. Cage à oiseaux (30) selon la revendication 19, dans laquelle un bassin pour oiseaux (185) est apte à être fixé dans un tiroir (166).
